# FASCICULE DE BREVET EUROPEEN

(11) **EP 3 227 389 B1**
(45) Date de publication et mention de la délivrance du brevet: **08.06.2022**
(21) Numéro de dépôt: 15817952.3
(22) Date de dépôt: 24.11.2015
(51) Int. Cl.: C08L 81/02, C08G 75/02, C08L 77/00

(54) **COMPOSITION THERMOPLASTIQUE A BASE DE POLY(SULFURE DE PHENYLENE) ET DE POLYOLÉFINE GREFFÉE POLYAMIDE**
THERMOPLASTISCHE ZUSAMMENSETZUNG AUS POLYPROPYLENSULFID UND POLYAMIDGEPFROPFTEM POLYOLEFIN
THERMOPLASTIC COMPOSITION MADE OF POLYPHENYLENE SULPHIDE AND POLYAMIDE-GRAFTED POLYOLEFIN

(30) Priorité: 03.12.2014 FR 1461842
(43) Date de publication de la demande: 11.10.2017
(73) Titulaire: Arkema France, 92700 Colombes (FR)
(72) Inventeur: ARIURA, Fumi, Osaka 565-0824 (JP); SABARD, Mathieu, 27470 Serquigny (FR); JOUSSET, Dominique, 78380 Bougival (FR)
(74) Mandataire: Arkema Patent
(86) Numéro de dépôt international: PCT/FR2015/053184
(87) Numéro de publication internationale: WO 2016/087746

(56) Documents cités:
- WO-A1-2013/160620
- WO-A2-2012/040591
- US-A- 5 759 925

## Description

### Domaine de l'invention

L'invention a pour objet une composition thermoplastique à base de poly(sulfure de phénylène), également dénommé PPS. Plus particulièrement, la composition thermoplastique selon l'invention se présente sous la forme d'un mélange essentiellement à base de PPS et d'un polymère éventuellement nanostructuré, plus précisément une polyoléfine greffé polyamide d'un type particulier

L'invention se rapporte également à une structure multicouche dans laquelle au moins une des couches est constituée par la composition selon l'invention.

### Etat de l'art

Le poly(sulfure de phénylène), ou PPS, est une résine bien connue dans le domaine de l'automobile car ce thermoplastique présente plusieurs propriétés intéressantes dont un module de flexion élevé, une température de fusion élevée, une grande résistance à la chaleur et des propriétés barrière aux essences et carburants qui le rende particulièrement adapté à la réalisation de tuyaux ou câbles pour l'automobile et les véhicules de manière générale.

Des modifiants plastifiants ou polymériques ont souvent été utilisés pour améliorer les qualités des PPS ou plus précisément leur conférer des propriétés complémentaires à certaines applications.

Néanmoins, les plastifiants, tels les phtalates d'alkyle ou les phosphates, migrent avec le temps à la surface de la composition thermoplastique de PPS (phénomène connu sous l'appellation de « bleeding »), ce qui a pour conséquence un changement des propriétés mécaniques et également de l'aspect du mélange thermoplastique ou du produit final.

D'autre part, les modifiants polymériques utilisés à l'heure actuelle, tels que des polyoléfines fonctionnalisées (c'est-à-dire disposant de groupements ou fonctions chimiquement réactives), conduisent à une augmentation de la viscosité à l'état fondu et/ou à des problématiques de gélification (réseau polymère entièrement réticulé) non souhaités.

Ainsi, il est recherché à l'heure actuelle un modifiant polymérique qui permettent d'améliorer significativement les propriétés des résines PPS, sans dégrader les qualités de ce dernier et sans perturber le procédé de préparation/fabrication.

On connaît à l'heure actuelle par le document WO 02/28959 un copolymère greffé à blocs polyamides sur un tronc en polyoléfine qui est choisi parmi les copolymères éthylène/anhydride maléique et éthylène/(méth)acrylate d'alkyle/anhydride maléique, formant un alliage co-continu de préférence nanostructuré; cela confère à ce terpolymère/copolymère des propriétés thermomécaniques exceptionnelles, qui sont maintenues en redispersant ce copolymère greffé dans des polyoléfines souples telles que les polymères souples de l'éthylène.

Néanmoins, un tel polymère consistant en une polyoléfine comportant une pluralité de greffons polyamide n'est pas une polyoléfine fonctionnalisée (des greffons sont déjà présents sur la chaîne principale de sorte que sa compatibilité avec le PPS est particulièrement incertaine. En outre, le polymère greffé polyamide susvisé est nanostructurée ce qui pourrait induire un fort risque supplémentaire d'incompatibilité.

On connaît également le document WO 2013/160620 qui divulgue une polyoléfine fonctionnalisée, le document US 5759925 qui divulgue une résine PPS et le document WO 2012/040591 qui divulgue des mélanges polyoléfine-PPS mais l'invention objet de la présente demande utilise un type bien particulier de polyoléfine greffé polyamide.

Le document WO 2013/160620 A1 décrit une composition thermoplastique comprenant une polyoléfine greffée polyamide, dans laquelle les greffons en polyamide sont attachés à un tronc de polyoléfine par le reste d'un monomère insaturé fixé sur le tronc et capable de réagir par polycondensation.

Le document US 5,759,925 A décrit une composition de poly (sulfure de phénylène) et de polyamide contenant comme compatibilisant une polyoléfine greffée d'acide maléique et d'acide acrylique.

Le document WO 2012/040591 A1 décrit des structures laminées comprenant des compositions de polymères thermoplastiques comme les poly (sulfure de phénylène), les polyoléfines et leurs mélanges.

### Brève description de l'invention

Il a été constaté par la demanderesse, après diverses expériences et manipulations, que, contrairement aux enseignements bien connus de l'homme du métier, un mélange particulier de PPS avec le polymère polyoléfine greffé polyamide susvisé permet d'obtenir une composition thermoplastique présentant une bien meilleure ductilité, une bien meilleure résistance au fluage et en enfin une meilleure processabilité, ceci tout en conservant les qualités premières du PPS.

Ainsi, la présente invention concerne une composition thermoplastique consistant en un mélange de polymères, consistant en :
- un premier polymère consistant en du poly(sulfure de phénylène), présent entre 55% et 95% en poids du mélange,
- un modifiant thermoplastique, présent entre 5% et 45% en poids du mélange,
- éventuellement un ou plusieurs adjuvants fonctionnels, présent au plus à hauteur de 10 % en poids du mélange, de préférence au plus de 5 % en poids du mélange,
caractérisée en ce que le modifiant thermoplastique comprend un second polymère consistant en un tronc en polyoléfine contenant au moins un monomère insaturé (X) et une pluralité de greffons en polyamide, les greffons en polyamide sont attachés au tronc en polyoléfine par le reste du monomère insaturé (X) comprenant une fonction capable de réagir par une réaction de condensation avec un polyamide ayant au moins une extrémité amine et/ou au moins une extrémité acide carboxylique, le reste du monomère insaturé (X) est fixé sur le tronc par greffage ou copolymérisation.

D'autres caractéristiques avantageuses de l'invention sont précisées dans la suite :
- de préférence, le modifiant thermoplastique comprend en outre un troisième polymère consistant en une ou plusieurs polyoléfines, dont de préférence au moins une polyoléfine fonctionnalisée présentant au moins une fonction époxy et/ou anhydride maléique.
- avantageusement, le second et troisième polymères sont chacun présent dans le modifiant thermoplastique entre 5% et 95%, idéalement entre 20 et 80%, de préférence entre 40% et 60% en poids dudit modifiant thermoplastique (la somme de ces deux polymères constituant 100% du modifiant thermoplastique).
- selon une possibilité préférée offerte par l'invention, la composition selon l'invention prévoit que le modifiant thermoplastique consiste en le second et le troisième susdit polymères,
- avantageusement, le modifiant thermoplastique représente de 5% à 45%, de préférence entre 10% et 30%, en poids du susdit mélange.
- selon un aspect particulièrement intéressant de l'invention, le susdit polymère greffé, à savoir le susdit second polymère, est nanostructuré.
- de préférence, concernant le second polymère, la masse molaire en nombre des susdits greffons polyamide du susdit polymère greffé est comprise dans la gamme allant de 1000 à 10000 g/mole, de préférence comprise entre 1000 et 5000 g/mole..
- de préférence, concernant le second polymère, les greffons en polyamide comprennent au moins un copolyamide, par exemple 6/12 mono NH₂, et/ou un polyamide 6 monofonctionnel NH₂ et/ou un polyamide 11 monofonctionnel NH₂.
- de préférence, l'adjuvant fonctionnel consiste en un ou plusieurs plastifiants, promoteurs d'adhésion, stabilisants UV et/ou absorbeurs UV, antioxydants, retardateurs de flamme, colorants/azurants, pigments et charges renforçantes.

L'invention concerne également une structure multicouche, telle que notamment un revêtement de câble ou un tuyau, comportant une pluralité de couches adjacentes, caractérisée en ce qu'au moins une de ces couches consiste en la composition telle que définie ci-dessus.

Il doit être noté que la composition selon l'invention est présentée en lien avec l'application à un tube, tuyau ou analogue mais bien entendu cette composition thermoplastique pourra être envisagée pour toutes autres applications où une telle composition est avantageusement utilisable, notamment dans les structures multicouches telles que par exemple les câbles (notamment les tubes de transport d'air ou de fluide), les chaussures (par exemple dans le domaine du ski), une ou plusieurs des couches d'un module photovoltaïque, les films ou revêtements adhésifs.

### Description détaillée de l'invention

S'agissant du premier polymère, il consiste en un poly(sulfure de phénylène), ou PPS. Ce polymère, apparu sur le marché dans les années 70, est bien connu de l'homme du métier. Le PPS est généralement préparé par couplage nucléophile, la polycondensation du p-dichlorobenzène avec le sulfure de sodium, dans des solvants aprotiques tels la N-méthyle-2-pyrrolidone.

Le second polymère est décrit en détail notamment dans le document susvisé WO 02/28959.

S'agissant du tronc polyoléfine du second polymère greffé polyamide, c'est un polymère comprenant comme monomère une α-oléfine.

On préfère les α-oléfines ayant de 2 à 30 atomes de carbone.

A titre d'a-oléfine, on peut citer l'éthylène, le propylène, 1-butène, 1-pentène, 3-méthyl-1-butène, 1-hexène, 4-méthyl-1-pentène, 3-méthyl-1-pentène, 1-octène, 1-décène, 1-dodécène, 1-tétradécène, 1-hexadécène, 1-octadécène, 1-eicocène, 1-dococène, 1-tétracocène, 1-hexacocène, 1-octacocène, et 1-triacontène.

On peut également citer les cyclo-oléfines ayant de 3 à 30 atomes de carbone, préférentiellement de 3 à 20 atomes de carbone, tels que le cyclopentane, le cycloheptène, le norbornène, le 5-méthyl-2-norbomène, le tétracyclododécène, et le 2-méthyl-1,4,5,8-diméthano-1,2,3,4,4a,5,8,8a-octahydronaphthalène ; di et polyoléfines, telles que la butadiène, l'isoprène, le 4-méthyl-1,3-pentadiène, le 1,4-pentadiène, 1,5-hexadiène, 1,3-hexadiène, 1,3-octadiène, 1,4-octadiène, 1,5-octadiène, 1,6-octadiène, l'éthylidènenorbomène, le vinyle norbornène, le dicyclopentadiène, le 7-méthyl-1,6-octadiène, le 4-éthylidiène-8-méthyl-1,7-nonadiène, et le 5,9-diméthyl-1,4,8-décatriène ; les composés vinyliques aromatiques tels que le mono- ou poly alkylstyrènes (comprenant le styrène, o-méthylstyrène, m-méthylstyrène, p-méthylstyrène, o,p-diméthylstyrène, o-éthylstyrène, m-éthylstyrène et p-éthylstyrène), et les dérivés comprenant des groupes fonctionnels tels que le méthoxystyrène, l'éthoxystyrène, l'acide benzoïque vinylique, le benzoate de méthyle vinyle, l'acétate de benzyle vinyle, l'hydroxystyrène, l'o-chlorostyrène, le p-chlorostyrène, le di-vinyle benzène, le 3-phénylpropène, le 4-phénylpropène, le α-méthylstyrène, le vinyle chloride, le 1,2-difluoroéthylène, le 1,2-dichloroéthylène, le tétrafluoroéthylène, et le 3,3,3-trifluoro-1-propène.

Dans le cadre de la présente invention, le terme d'a-oléfine comprend également le styrène. On préfère le propylène et tout spécialement l'éthylène comme α-oléfine.

Cette polyoléfine peut-être un homopolymère lorsqu'une seule α-oléfine est polymérisée dans la chaîne polymère. On peut citer comme exemples le polyéthylène (PE) ou le polypropylène (PP).

Cette polyoléfine peut aussi être un copolymère lorsqu'au moins deux comonomères sont copolymérisés dans la chaîne polymère, l'un des deux comonomères dit le «premier comonomère » étant une α-oléfine et l'autre comonomère, dit « deuxième comonomère », est un monomère capable de polymériser avec le premier monomère.

A titre de deuxième comonomère, on peut citer :
- une des α-oléfines déjà citées, celle-ci étant différente du premier comonomère α-oléfine,
- les diènes tels que par exemple le 1,4-hexadiène, l'éthylidène norbornène, le butadiène
- les esters d'acides carboxyliques insaturés tels que par exemple les acrylates d'alkyle ou les méthacrylates d'alkyle regroupés sous le terme (méth)acrylates d'alkyles. Les chaînes alkyles de ces (méth)acrylates peuvent avoir jusqu'à 30 atomes de carbone. On peut citer comme chaînes alkyles le méthyle, l'éthyle, le propyl, n-butyl, sec-butyl, isobutyl, tert-butyl, pentyl, hexyl, heptyl, octyl, 2-ethylhexyl, nonyl, decyl, undecyl, dodecyl, tridecyl, tetradecyl, pentadecyl, hexadecyl, heptadecyl, octadecyl, nonadecyl, eicosyl, hencosyl, docosyl, tricosyl, tetracosyl, pentacosyl, hexacosyl, heptacosyl, octacosyl, nonacosyl. On préfère les (méth)acrylates de méthyle, éthyle et butyle comme esters d'acide carboxylique insaturés.
- les esters vinyliques d'acide carboxyliques. A titre d'exemples d'esters vinyliques d'acide carboxylique, on peut citer l'acétate de vinyle, le versatate de vinyle, le propionate de vinyle, le butyrate de vinyle, ou le maléate de vinyle. On préfère l'acétate de vinyle comme ester vinylique d'acide carboxylique.

Avantageusement, le tronc en polyoléfine comprend au moins 50 % en moles du premier comonomère ; sa densité peut être avantageusement comprise entre 0,91 et 0,96.

Les troncs polyoléfines préférés sont constitués d'un copolymère éthylène-(méth)acrylate d'alkyle. En utilisant ce tronc polyoléfine, on obtient une excellente tenue au vieillissement à la lumière et à la température.

On ne sortirait pas du cadre de l'invention si différents « deuxièmes comonomères » étaient copolymérisés dans le tronc polyoléfine.

Selon la présente invention, le tronc polyoléfine contient au moins un reste de monomère insaturé (X) pouvant réagir sur une fonction acide et/ou amine du greffon polyamide par une réaction de condensation. Selon la définition de l'invention, le monomère insaturé (X) n'est pas un « deuxième comonomère ».

Comme monomère insaturé (X) compris sur le tronc polyoléfine, on peut citer :
- les époxydes insaturés. Parmi ceux-ci, ce sont par exemple les esters et éthers de glycidyle aliphatiques tels que l'allylglycidyléther, le vinylglycidyléther, le maléate et l'itaconate de glycidyle, l'acrylate et le méthacrylate de glycidyle. Ce sont aussi par exemple les esters et éthers de glycidyle alicycliques tels que le 2-cyclohexène-1-glycidyléther, le cyclohexène-4,5-diglycidylcarboxylate, le cyclohexène-4-glycidyl carboxylate, le 5-norbornène-2-méthyl-2-glycidyl carboxylate et l'endocis-bicyclo(2,2,1)-5-heptène-2,3-diglycidyl dicarboxylate. On préfère utiliser le méthacrylate de glycidyle comme époxyde insaturé.

- les acides carboxyliques insaturés et leurs sels, par exemple l'acide acrylique ou l'acide méthacrylique et les sels de ces mêmes acides.
- les anhydrides d'acide carboxylique. Ils peuvent être choisis par exemple parmi les anhydrides maléique, itaconique, citraconique, allylsuccinique, cyclohex-4-ène-1,2-dicarboxylique, 4-méthylènecyclohex-4-ène-1,2-dicarboxylique, bicyclo(2,2,1)hept-5-ène-2,3-dicarboxylique, et x-méthylbicyclo(2,2,1)hept-5-ène-2,2-dicarboxylique. On préfère utiliser l'anhydride maléique comme anhydride d'acide carboxylique.

Le monomère insaturé (X) est de préférence un anhydride d'acide carboxylique insaturé.

Selon une version avantageuse de l'invention, le nombre préféré de monomère insaturé (X) fixé en moyenne sur le tronc polyoléfine est supérieur ou égal à 1,3 et/ou préférentiellement inférieur ou égal à 20.

Ainsi, si (X) est l'anhydride maléique et la masse molaire en nombre de la polyoléfine est 15 000 g/mol, on a trouvé que ceci correspondait à une proportion d'anhydride d'au moins 0,8 % en masse de l'ensemble du tronc de polyoléfine et d'au plus 6,5%. Ces valeurs associées à la masse des greffons polyamide déterminent la proportion de polyamide et de tronc dans le polymère greffé polyamide.

Le tronc polyoléfine contenant le reste du monomère insaturé (X) est obtenu par polymérisation des monomères (premier comonomère, deuxième comonomère éventuel, et éventuellement monomère insaturé (X)). On peut réaliser cette polymérisation par un procédé radicalaire à haute pression ou un procédé en solution, en réacteur autoclave ou tubulaire, ces procédés et réacteurs étant bien connus de l'homme du métier. Lorsque le monomère insaturé (X) n'est pas copolymérisé dans le tronc polyoléfine, il est greffé sur le tronc polyoléfine. Le greffage est également une opération connue en soi. La composition serait conforme à l'invention si plusieurs monomères fonctionnels (X) différents étaient copolymérisés et/ou greffés sur le tronc polyoléfine.

Selon les types et ratio de monomères, le tronc polyoléfine peut être semi-cristallin ou amorphe. Dans le cas des polyoléfines amorphes, seule la température de transition vitreuse est observée, tandis que dans celui des polyoléfines semi-cristallins une température de transition vitreuse et une température de fusion (qui sera nécessairement supérieure) sont observées. Il suffira à l'homme du métier de sélectionner les ratios de monomère et les masses moléculaires du tronc polyoléfine pour pouvoir obtenir aisément les valeurs voulues de température de transition vitreuse, éventuellement de température de fusion ainsi que de viscosité du tronc polyoléfine.

De manière préférée, la polyoléfine a un Melt Flow Index (MFI) compris entre 0,5 et 400 g/10min (190°C, 2,16kg, ASTM D 1238).

Les greffons polyamide peuvent être soit des homopolyamides, soit des copolyamides.

Sont notamment visés par l'expression "greffons polyamides" les homopolyamides aliphatiques qui résultent de la polycondensation :
- d'un lactame,
- ou d'un acide alpha, omega-aminocarboxylique aliphatique,
- ou d'une diamine aliphatique et d'un diacide aliphatique.

A titre d'exemples de lactame, on peut citer le caprolactame, l'oenantholactame et le lauryllactame.

A titre d'exemples d'acide alpha, omega-aminocarboxylique aliphatique, on peut citer l'acide aminocaproïque, l'acide amino-7-heptanoïque, l'acide amino-11-undécanoïque et l'acide amino-12-dodécanoïque.

A titre d'exemples de diamine aliphatique, on peut citer l'hexa-méthylènediamine, la dodécaméthylènediamine et la triméthylhexaméthylène diamine.

A titre d'exemples de diacide aliphatique, on peut citer les acides adipique, azélaïque, subérique, sébacique et dodécanedicarboxylique.

Parmi les homopolyamides aliphatiques, on peut citer, à titre d'exemple et de façon non limitative, les polyamides suivants : le polycaprolactame (PA6) ; le polyundécanamide (PA11, commercialisé par ARKEMA sous la marque Rilsan^{®}) ; le polylauryllactame (PA12, également commercialisé par ARKEMA sous la marque Rilsan^{®}) ; le polybutylène adipamide (PA4.6) ; le polyhexaméthylène adipamide (PA6.6) ; le polyhexaméthylène azélamide (PA6.9) ; le polyhexaméthylène sébaçamide (PA-6.10) ; le polyhexaméthylène dodécanamide (PA6.12) ; le polydécaméthylène dodécanamide (PA10.12) ; le polydécaméthylène sébaçanamide (PA10.10) et le polydodecaméthylène dodécanamide (PA12.12).

Sont également visés par l'expression "polyamides semi-cristallins" les homopolyamides cycloaliphatiques.

On peut notamment citer les homopolyamides cycloaliphatiques qui résultent de la condensation d'une diamine cycloaliphatique et d'un diacide aliphatique.

A titre d'exemple de diamine cycloaliphatique, on peut citer la 4,4'-méthylene-bis(cyclohexylamine), encore dénommée para-bis(aminocyclo-hexyl)méthane ou PACM, la 2,2'-diméthyl-4,4'méthylène-bis(cyclo-hexyl-amine), encore dénommée bis-(3-méthyl-4-aminocyclohexyl)-méthane ou BMACM.

Ainsi, parmi les homopolyamides cycloaliphatiques, on peut citer les polyamides PACM.12, résultant de la condensation du PACM avec le diacide en C12, les BMACM.10 et BMACM.12 résultant de la condensation de la BMACM avec, respectivement, les diacides aliphatiques en C10 et en C12.

Sont également visés par l'expression "greffons polyamide" les homopolyamides semi-aromatiques qui résultent de la condensation :
- d'une diamine aliphatique et d'un diacide aromatique, tel que l'acide téréphtalique (T) et l'acide isophtalique (I). Les polyamides obtenus sont alors couramment appelés "polyphtalamides" ou PPA ;
- d'une diamine aromatique, telle que la xylylènediamine, et plus particulièrement la métaxylylènediamine (MXD) et d'un diacide aliphatique.

Ainsi, et de manière non limitative, on peut citer les polyamides 6.T, 6.I, MXD.6 ou encore MXD.10.

Les greffons polyamide rentrant en jeu dans la composition selon l'invention peuvent également être des copolyamides. Ceux-ci résultent de la polycondensation d'au moins deux des groupes de monomères énoncés ci-dessus pour l'obtention d'homopolyamides. Le terme « monomère » dans la présente description des copolyamides doit être pris au sens d' « unité répétitive ». En effet, le cas où une unité répétitive du PA est constituée de l'association d'un diacide avec une diamine est particulier. On considère que c'est l'association d'une diamine et d'un diacide, c'est-à-dire le couple diamine-diacide (en quantité équimolaire), qui correspond au monomère. Ceci s'explique par le fait qu'individuellement, le diacide ou la diamine n'est qu'une unité structurale, qui ne suffit pas à elle seule à polymériser pour donner un polyamide.

Ainsi, les copolyamides couvrent notamment les produits de condensation :
- d'au moins deux lactames,
- d'au moins deux acides alpha,omega-aminocarboxyliques aliphatiques,
- d'au moins un lactame et d'au moins un acide alpha,omega-aminocarboxylique aliphatique,
- d'au moins deux diamines et d'au moins deux diacides,
- d'au moins un lactame avec au moins une diamine et au moins un diacide,
- d'au moins un acide alpha,omega-aminocarboxylique aliphatique avec au moins une diamine et au moins un diacide,
la(les) diamine(s) et le(s) diacide(s) pouvant être, indépendamment l'un de l'autre, aliphatiques, cycloaliphatiques ou aromatiques.

Selon les types et ratio de monomères, les copolyamides peuvent être semi-cristallins ou amorphes. Dans le cas des copolyamides amorphes, seule la température de transition vitreuse est observée, tandis que dans celui des copolyamides semi-cristallins une température de transition vitreuse et une température de fusion (qui sera nécessairement supérieure) sont observées.

Parmi les copolyamides amorphes que l'on peut utiliser dans le cadre de l'invention, on peut citer par exemple les copolyamides contenant des monomères semi-aromatiques.

Parmi les copolyamides, on pourra également utiliser les copolyamides semi-cristallins et particulièrement ceux de type PA 6/11, PA6/12 et PA6/11/12.

Le degré de polymérisation peut varier dans de larges proportions, selon sa valeur c'est un polyamide ou un oligomère de polyamide.

Avantageusement, les greffons polyamide sont monofonctionnels.

Pour que le greffon polyamide ait une terminaison monoamine, il suffit d'utiliser un limiteur de chaîne de formule : 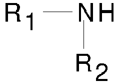 dans laquelle :
- R1 est l'hydrogène ou un groupement alkyle linéaire ou ramifié contenant jusqu'à 20 atomes de carbone,
- R2 est un groupement ayant jusqu'à 20 atomes de carbone alkyle ou alcényle linéaire ou ramifié, un radical cycloaliphatique saturé ou non, un radical aromatique ou une combinaison des précédents. Le limiteur peut être, par exemple, la laurylamine ou l'oleylamine.

Pour que le greffon polyamide ait une terminaison monoacide carboxylique, il suffit d'utiliser un limiteur de chaîne de formule R'1-COOH, R'1-CO-O-CO-R'2 ou un diacide carboxylique.

R'1 et R'2 sont des groupements alkyles linéaires ou ramifiés contenant jusqu'à 20 atomes de carbone.

Avantageusement, le greffon polyamide possède une extrémité à fonctionnalité amine. Les limiteurs monofonctionnels de polymérisation préférés sont la laurylamine et l'oléylamine.

Les greffons polyamide ont une masse molaire comprise entre 1000 et 10000 g/mole, de préférence comprise entre 1000 et 5000 g/mole.

La polycondensation peut être utilisée pour procéder au greffage des greffons de polyamide et s'effectue selon les procédés habituellement connus, par exemple à une température comprise en général entre 200 et 300°C, sous vide ou sous atmosphère inerte, avec agitation du mélange réactionnel. La longueur de chaîne moyenne du greffon est déterminée par le rapport molaire initial entre le monomère polycondensable ou le lactame et le limiteur monofonctionnel de polymérisation. Pour le calcul de la longueur de chaîne moyenne, on compte habituellement une molécule de limiteur de chaîne pour une chaîne de greffon.

Il suffira à l'homme du métier de sélectionner les types et ratio de monomères ainsi que choisir les masses molaires des greffons polyamide pour pouvoir obtenir aisément les valeurs voulues de température de transition vitreuse, éventuellement de température de fusion ainsi que de viscosité du greffon polyamide.

La réaction de condensation du greffon polyamide sur le tronc de polyoléfine contenant le reste de X (ou le monomère fonctionnalisé pour le second copolymère greffé, à savoir le copolymère élastomère) s'effectue par réaction d'une fonction amine ou acide du greffon polyamide sur le reste de X. Avantageusement, on utilise des greffons polyamide monoamine et on crée des liaisons amides ou imides en faisant réagir la fonction amine sur la fonction du reste de X.

On réalise cette condensation de préférence à l'état fondu. Pour fabriquer la composition selon l'invention, on peut utiliser les techniques classiques de malaxage et/ou d'extrusion. Les composants de la composition sont ainsi mélangés pour former un compound qui pourra éventuellement être granulé en sortie de filière. Avantageusement, des agents de couplage sont ajoutés lors du compoundage.

Pour obtenir une composition nanostructurée, on peut ainsi mélanger le greffon polyamide et le tronc dans une extrudeuse, à une température généralement comprise entre 200 et 300 °C. Le temps de séjour moyen de la matière fondue dans l'extrudeuse peut être compris entre 5 secondes et 5 minutes, et de préférence entre 20 secondes et 1 minute. Le rendement de cette réaction de condensation est évalué par extraction sélective des greffons de polyamide libres, c'est-à-dire ceux qui n'ont pas réagi pour former le polymère greffé polyamide.

La préparation de greffons polyamide à extrémité amine ainsi que leur addition sur un tronc de polyoléfine contenant le reste de (X) ou d'un monomère fonctionnalisé (second copolymère) est décrite dans les brevets US3976720, US3963799, US5342886 et FR2291225. Sans que cette particularité soit essentielle pour la présente invention, le polymère greffé polyamide de la présente invention présente avantageusement une organisation nanostructurée.

S'agissant du troisième polymère optionnel, il consiste en une ou plusieurs polyoléfines, éventuellement ou de préférence fonctionnalisée, autrement dit éventuellement un mélange de polyoléfines, éventuellement dont au moins une polyoléfine fonctionnalisée.

Avantageusement, la polyoléfine fonctionnalisée comprend au moins un groupe fonctionnel du type anhydride maléique ou époxy. Il pourra s'agir de Lotader^{®} ou d'un Orevac^{®}, commercialisés par la demanderesse. Il pourra aussi s'agir d'élastomères éthyléniques de type Tafmer^{®} MH5020 commercialisés par la société Mitsui Chemicals, de type Exxelor VA1801, VA1803 commercialisés par la société Exxon mobil chemical, de type Fusabond^{®} N493 commercialisé par la société Dupont.

Concernant l'adjuvant fonctionnel, optionnel, il peut être présent dans la composition à une hauteur maximum de 10 % en poids de la composition et sera choisis limitativement parmi les composés mentionnés ci-après ou un mélange de ces composés.

Des plastifiants pourront être ajoutés à la composition selon l'invention afin de faciliter la mise en œuvre et améliorer la productivité du procédé de fabrication de la composition et des structures. On citera comme exemples les huiles minérales paraffiniques aromatiques ou naphtaléniques qui permettent également d'améliorer le pouvoir d'adhérence de la composition selon l'invention. On peut également citer comme plastifiant les phtalates, azelates, adipates, le phosphate de ticrésyle.

De la même manière, des promoteurs d'adhésion, bien que non nécessaires, peuvent être avantageusement ajoutés afin d'améliorer le pouvoir d'adhérence de la composition lorsque celui-ci doit être particulièrement élevé. Le promoteur d'adhésion est un ingrédient non polymérique ; il peut être organique, cristallin, minéral et plus préférentiellement semi-minéral semi-organique. Parmi ceux-ci, on peut citer les titanates ou les silanes organiques, comme par exemple les monoalkyl titanates, les trichlorosilanes et les trialkoxysilanes, les trialcooxysilane. On pourra également prévoir que ces promoteurs d'adhésion sont directement greffés sur le premier ou le second copolymère par une technique bien connue de l'homme du métier, par exemple via l'extrusion réactive.

Le rayonnement UV étant susceptible d'entraîner un léger jaunissement des compositions thermoplastiques, des stabilisants UV et des absorbeurs UV (ces composés étant dénommés de manière générale des agents anti-UVs) tels que le benzotriazole, le benzophénone et les autres amines encombrés, peuvent être ajoutés dans certaines applications où un tel phénomène doit être évité. Ces composés peuvent être par exemple à base de benzophénone ou de benzotriazole. On peut les ajouter dans des quantités inférieures à 10 % en masse de la masse totale de la composition et préférentiellement de 0,1 à 2 %.

On pourra également ajouter des anti-oxydants pour limiter le jaunissement lors de la fabrication de la composition tels que les composés phosphorés (phosphonites et/ou phosphites) et les phénoliques encombrés. On peut ajouter ces anti-oxydants dans des quantités inférieures à 10 % en masse de la masse totale de la composition et préférentiellement de 0,05 à 2 %.

De la même manière, dans certaines applications, des agents retardateurs de flamme peuvent également être ajoutés à la composition selon l'invention. Ces agents peuvent être halogénés ou non-halogénés. Parmi les agents halogénés, on peut citer les produits bromés. On peut également utiliser comme agent non-halogéné les additifs à base de phosphore tels que le polyphosphate d'ammonium, les phosphinates et phosphonates d'aluminium, le cyanurate de mélamine, le pentaérythritol, les zéolithes ainsi que les mélanges de ces agents. La composition peut comprendre ces agents dans des proportions allant de 1 à 10 % par rapport à la masse totale de la composition. On pourra également ajouter des composés colorants ou azurants.

On peut également ajouter à la composition des pigments comme par exemple du dioxyde de titane ou de l'oxyde de zinc dans des proportions allant généralement de 1 à 10 % par rapport à la masse totale de la composition.

On peut également ajouter à la composition des charges renforçantes telles que le talc, les fibres de verre, les fibres de carbone, les montmorillonites, les nanotubes de carbone, le noir de carbone, dans des proportions allant généralement de 0,1% à 10 % par rapport à la masse totale de la composition.

### Préparation de la composition selon l'invention :

Comme cela a été mentionné précédemment, la technique de greffage des greffons polyamide sur le tronc polyoléfine pour obtenir la polyoléfine greffé polyamide selon l'invention est bien connu de l'homme du métier, et notamment des documents cités précédemment FR 2912150, FR 2918150 ou EP 21966489.

Le PPS, l'adjuvant fonctionnel (additif cités ci-dessus) ainsi que la polyoléfine fonctionnalisée, sont parfaitement connus de l'homme du métier ainsi que leurs obtentions. Le procédé de mélange de ces composés est tout à fait classique et ne requiert aucune explication spécifique pour l'homme du métier.

On ne sort donc pas du cadre de l'invention si des agents réticulant sont ajoutés. On peut citer comme exemples des isocyanates ou des peroxydes organiques. Cette réticulation peut également être réalisée par des techniques connues d'irradiation. Cette réticulation peut être effectuée par l'une des nombreuses méthodes connues de l'homme du métier, notamment par l'utilisation d'initiateurs activés thermiquement, par exemple des composés peroxydes et azo, des photoinitiateurs tels que le benzophénone, par des techniques de radiation comportant des rayons lumineux, des rayons UV, des faisceaux d'électrons et des rayons X, de silanes porteurs de fonctions réactives comme un amino silane, un époxy silane, un vinyle silane tel que par exemple le vinyle silane tri-éthoxy ou tri-méthoxy, et de la réticulation par voie humide. Le manuel intitulé « Handbook of polymer foams and technology » supra, aux pages 198 à 204, fournit des enseignements complémentaires auxquels l'homme du métier peut se référer.

### Matériaux employés pour former les formulations testées :

**Lotader^{®} AX8840**: copolymère d'éthylène et de méthacrylate de glycidyle (8% en poids) produit par ARKEMA possédant un MFI (190°C sous 2,16 kg mesuré selon ISO 1133) de 5g/10min.

**Lotader^{®} AX8900**: terpolymère d'éthylène, d'acrylate de méthyle (24% en poids) et de méthacrylate de glycidyle (8% en poids) produit par ARKEMA possédant un MFI (190°C sous 2,16 kg mesuré selon ISO 1133) de 6g/10min.

**Lotader^{®} 4210 :** terpolymère d'éthylène, acrylate de butyle (6,5% en poids) et d'anhydride maléique (3,6 % en poids) produit par ARKEMA possédant un MFI de (190°C sous 2,16 kg mesuré selon ISO 1133) de 6g/10min.

**Fusabond N493** : copolymère éthylène-octène greffé anhydride maléique (MAH) commercialisé par Dupont, de densité 0.87 g/cm³ et de MFI 1.6 g/10 min (190°C sous 2,16 kg mesuré selon ISO 1133).

**PPS :** poly(sulfure de phénylène) de la société DIC.

**Apolhya**^{®} **LP3**: La famille Apolhya^{®} est une famille de polymères commercialisée par ARKEMA qui allient les propriétés des polyamides à celles des polyoléfines grâce à l'obtention de morphologies co-continues à l'échelle manométrique. Ce grade se caractérise par un MFI (« Melt Flow Index ») de 1,0 gramme/10 minutes à 230°C sous 2,16 kg et une température de fusion de 220°C.

### Obtention des formulations et films testés :

Les formulations ont été préparées par « compoundage » grâce à une extrudeuse double vis co-rotative de type TEX30 X^{®} présentant une longueur de vis de L = 1365 mm (millimètre) et un rapport L/D = 45,5 D (avec D égal au diamètre de la vis) dont les éléments de fourreaux sont chauffés selon un profil plat à 310°C, la vitesse de rotation est de 240 rpm (« round per minute » ou tour par minute) avec un débit de 15 kg/h (kilogramme par heure).

Des films monocouches de 200 µm (micromètre) des compositions ont été réalisés par extrusion de film à plat sur une extrudeuse ayant un diamètre de vis de 20mm pour un L/D = 25. Les éléments de fourreaux sont chauffés selon un profil plat à 300°C.

Les compositions préparées sont présentées ci-dessous :
- Composition n°1 : la composition thermoplastique comprend uniquement le PPS susvisé,
- Composition n°2 : la composition thermoplastique comprend 80 % en poids de PPS et 20 % en poids d'un mélange de polyoléfine fonctionnelle (mélange de Lotader^{®} AX8840 et de Lotader^{®} AX8900 (ratio massique 50/50))
- Composition n°3 : la composition thermoplastique comprend 80 % en poids de PPS et 20 % en poids d'Apolhya,
- Composition n° 4 : la composition thermoplastique comprend 80 % en poids de PPS et 20 % en poids d'un mélange (~50%-50%) de polyoléfine fonctionnelle (mélange de Lotader^{®} AX8840 et de Lotader^{®} AX8900 (ratio massique 50/50)) (~ 10 % en poids de la composition) et d'Apolhya (~10 % en poids de la composition),
- Composition n°5 : la composition thermoplastique comprend 60 % en poids de PPS et 40 % en poids d'un mélange (~75%-25%) de polyoléfine fonctionnelle (mélange de Lotader^{®} AX8840 et de Lotader^{®} AX8900 (ratio massique 50/50)) (~30 % en poids de la composition) et d'Apolhya (~10 % en poids de la composition),
- Composition n°6 : la composition thermoplastique comprend 60 % en poids de PPS et 40 % en poids d'un mélange (~25%-75%) de polyoléfine fonctionnelle (mélange de Lotader^{®} AX8840 et de Lotader^{®} AX8900 (ratio massique 50/50)) (~ 10 % en poids de la composition) et d'Apolhya ∼ (30 % en poids de la composition),
- Composition n°7 : la composition thermoplastique comprend 90 % en poids de PPS et 10 % en poids d'un mélange (~50%-50%) de polyoléfine fonctionnelle (mélange de Lotader^{®} AX8840 et de Lotader^{®} AX8900 (ratio massique 50/50)) (~5 % en poids de la composition) et d'Apolhya (~5 % en poids de la composition),
- Composition n°8 : la composition thermoplastique comprend 55 % en poids de PPS et 45 % en poids d'un mélange (∼89%-11%) de polyoléfine fonctionnelle (mélange de Lotader^{®} AX8840 et de Lotader^{®} AX8900 (ratio massique 50/50)) (~40 % en poids de la composition) et d'Apolhya (~5 % en poids de la composition),
- Composition n°9 : la composition thermoplastique comprend 55 % en poids de PPS et 45 % en poids d'un mélange (∼11%-89%) de polyoléfine fonctionnelle (mélange de Lotader^{®} AX8840 et de Lotader^{®} AX8900 (ratio massique 50/50)) (~5 % en poids de la composition) et d'Apolhya (~40 % en poids de la composition),
- Composition n°10 : la composition thermoplastique comprend 80 % en poids de PPS et 20 % en poids d'un mélange (~50%-50%) de polyoléfine fonctionnelle (mélange de Lotader AX8840 et de Lotader^{®} 4210 (ratio massique 50/50)) (~ 10 % en poids de la composition) et d'Apolhya (~ 10 % en poids de la composition)
- Composition n°11 : la composition thermoplastique comprend 80 % en poids de PPS et 20 % en poids d'un mélange (~50%-50%) de Fusabond N493 (~10 % en poids de la composition) et d'Apolhya (~10 % en poids de la composition)

### Tests réalisés sur les films :

Trois types de tests ont été réalisés sur les compositions 1 à 11 afin de tester la résolution éventuellement des problèmes techniques susmentionnés mais il doit être noté que les compositions selon l'invention présentent par ailleurs d'autres propriétés particulièrement intéressantes, à savoir qu'elles satisfont sensiblement aux mêmes qualités que le PPS seul (composition n°1).

Ces trois tests consistent d'une part à évaluer les propriétés mécaniques des différentes formulations selon la norme ISO 527 1A (module de traction exprimé en MégaPascal (MPa), allongement et contrainte) à température ambiante, d'autre part, à déterminer les propriétés de fluage (suivi de la déformation résiduelle après sollicitation mécanique à différentes températures), et enfin d'évaluer la ductilité des formulations à travers un test de choc Charpy à température ambiante (selon la norme iso 179 -leA).

### Essai de traction :

La mesure du module de traction et des allongements et contraintes, se fait selon la norme ISO 527 1A. Au préalable, les différentes éprouvettes des différentes formulations ont été conditionnées selon les conditions suivantes : 15 jours, à 23°C à un taux d'humidité de 50%.

### Test de fluage :

La résistance au fluage est évaluée à partir d'éprouvettes découpées dans les films (dimensions : 1cm x 5 cm x 0.2 mm). Un poids est appliqué à une extrémité de l'éprouvette correspondant à une contrainte de 0.5 Bars soit 0,05 MPa. La contrainte est appliquée pendant plusieurs minutes à différentes températures : 100°C, 120° C et 180°C pour chacune des compositions. La déformation résiduelle est mesurée après retour à température ambiante.

### Test de choc Charpy

Les essais de choc Charpy ont été menés sur des barreaux injectés et entaillés en V (rayon de fond d'entaille de 0.25 mm), à température ambiante selon la norme ISO 527 leA.

Les résultats des différents essais réalisés sur chacune des compositions montrent clairement d'une part les avantages techniques de la composition selon l'invention, bien que ces derniers ne soient en rien prévisibles, et d'autre part les domaines préférés (% massique) pour cette composition.

| | | | | | | | ***entaille en V (iso 179)*** |
|---|---|---|---|---|---|---|---|
| | **Module en tension** | **Allongement à la rupture %** | **Contrainte à la rupture Mpa** | **élongation (%) lors d'un essai de fluage** | | | **résilience (kJ/m²)** |
| PPS seul | 2620 Mpa | 4 | 86 | **100°C** | **120°C** | **180°C** | **résilience (kJ/m²)** |
| | | | | 80% 10 min temps avant rupture 17 min | casse temps avant rupture 20 sec | casse casse instantanée | 23°C 3 kJ/m² |
| 80% PPS + 20% FPO (*) | 1950 Mpa | 50 | 37 | **100°C** | **120°C** | **180°C** | 23°C |
| | | | | 110% 10 min temps avant rupture 15 min | - temps avant rupture 15 sec | - casse instantanée | 62 kJ/m² |
| 80% PPS + 20% LP3 | 2000 Mpa | 54 | 36 | **100°C** | **120°C** | **180°C** | **résilience (kJ/m²)** |
| | | | | 30% 10 min | | | 23°C |
| | | | | 55% 20 min casse > 25 min | 170% (5 min) casse > 10 min | 90% (1 min) casse > 3' | 61 kJ/m² |
| 80% PPS + 20% FPO*/LP3 (10/10) | 1970 Mpa | 51 | 39 | **100°C** | **120°C** | **180°C** | **résilience (kJ/m²)** |
| | | | | 40% 10 min | | | 23°C |
| | | | | 66% 20 min casse > 20 min | 200% (5 min) casse > 7 min | 50% (1 min) casse > 3 min | 59 kJ/m² |
| 60% PPS + 40% FPO*/LP3 (30/10) | 1100 Mpa | 62 | 26 | **100°C** | **120°C** | **180°C** | **résilience (kJ/m²)** |
| | | | | 100% 10 min | | | 23°C |
| | | | | 180% 20 min casse > 20 min | 180% (3 min) Temps avant rupture 5 min | Casse instantanée | 63 kJ/m² |
| 60% PPS + FPO*/LP3 (10/30) | 1190 Mpa | 71 | 27 | **100°C** | **120°C** | **180°C** | **résilience (kJ/m²)** |
| | | | | 80% 10 min | | | 23°C |
| | | | | 160% 20 min casse > 20 min | 130% (3 min) casse > 6 min | 170% (2 min) casse > 3 min | 58 kJ/m² |
| 90% PPS + 10% FPO*/LP3 (5/5) | 2280Mpa | 11 | 68 | **100°C** | **120°C** | **180°C** | **résilience (kJ/m²)** |
| | | | | 80% 10 min | | | 23°C |
| | | | | casse > 15 min | 200% (2 min) rupture après 3 min | 150% (1 min) Rupture après 2 min | 27 kJ/m² |
| 55% PPS + 45% FPO*/LP3 (40/5) | 980 Mpa | 78 | 21 | **100°C** | **120°C** | **180°C** | **résilience (kJ/m²)** |
| | | | | 120% 10 min | - | - | 23°C |
| | | | | 220% 13 min casse > 16 min | 200% (3 min) casse 5 min | Casse instantanée | 92 kJ/m² |
| 80% PPS + 20% FPO**/LP3 (10/10) | 1960 Mpa | 50 | 39 | **100°C** | **120°C** | **180°C** | **résilience (kJ/m²)** |
| | | | | 30% 10 min | | | 23°C |
| | | | | 60% 20 min casse > 20 min | 180% (5 min) casse > 10 min | 50% (1 min) casse > 3 min | 55 kJ/m² |
| 80% PPS + 20% Fusabond^{®} N493/LP3 (10/10) | 1920 Mpa | 62 | 33 | **100°C** | **120°C** | **180°C** | **résilience (kJ/m²)** |
| | | | | 40% 10 min | | | 23°C |
| | | | | 70% 20 min casse > 20 min | 220% (5 min) casse > 6 min | 70% (1 min) casse > 3 min | 70 kJ/m² |

| | | | | | | | |
|---|---|---|---|---|---|---|---|
| (^{∗}) Mélange de Lotader AX8840 et de Lotader AX8900 (ratio massique 50/50). (^{∗∗}) Mélange de Lotader AX8840 et de Lotader 4210 (ratio massique 50/50). FPO : Polyoléfine Fonctionnelle / LP3 : Apolhya^{®} LP3 | | | | | | | |

## Revendications

1. Composition thermoplastique consistant en un mélange de polymères, consistant en :
• un premier polymère consistant en du poly(sulfure de phénylène), présent entre 55% et 95% en poids du mélange,
• un modifiant thermoplastique, présent entre 5% et 45% en poids du mélange,
• éventuellement un ou plusieurs adjuvants fonctionnels, présent au plus à hauteur de 10 % en poids du mélange, de préférence au plus de 5 % en poids du mélange,
**caractérisée en ce que** le modifiant thermoplastique comprend un second polymère consistant en un tronc en polyoléfine contenant au moins un monomère insaturé (X) et une pluralité de greffons en polyamide, les greffons en polyamide sont attachés au tronc en polyoléfine par le reste du monomère insaturé (X) comprenant une fonction capable de réagir par une réaction de condensation avec un polyamide ayant au moins une extrémité amine et/ou au moins une extrémité acide carboxylique, le reste du monomère insaturé (X) est fixé sur le tronc par greffage ou copolymérisation.

2. Composition selon la revendication 1, **caractérisée en ce que** le modifiant thermoplastique comprend en outre un troisième polymère consistant en une ou plusieurs polyoléfines, dont de préférence au moins une polyoléfine fonctionnalisée présentant au moins une fonction époxy et/ou anhydride maléique.

3. Composition selon la revendication 2, **caractérisée** en ce le second et troisième polymères sont chacun présent dans le modifiant thermoplastique entre 5% et 95%, idéalement entre 20 et 80%, de préférence entre 40% et 60% en poids dudit modifiant thermoplastique (la somme de ces deux polymères constituant 100% du modifiant thermoplastique).

4. Composition selon la revendication 2 ou 3, **caractérisée en ce que** le modifiant thermoplastique consiste en le second et le troisième susdit polymères.

5. Composition selon l'une quelconque des revendications précédentes, **caractérisée en ce que** le modifiant thermoplastique représente de 5% à 45%, de préférence entre 10% et 30%, en poids du susdit mélange.

6. Composition selon l'une quelconque des revendications précédentes, **caractérisée en ce que** le susdit polymère greffé, à savoir le susdit second polymère, est nanostructuré.

7. Composition selon l'une quelconque des revendications précédentes, **caractérisée en ce que**, concernant le second polymère, la masse molaire en nombre des susdits greffons polyamide du susdit polymère greffé est comprise dans la gamme allant de 1000 à 10000 g/mole, de préférence comprise entre 1000 et 5000 g/mole.

8. Composition selon l'une quelconque des revendications précédentes, **caractérisée en ce que**, concernant le second polymère, les greffons en polyamide comprennent au moins un copolyamide, par exemple 6/12 mono NH₂, et/ou un polyamide 6 monofonctionnel NH₂ et/ou un polyamide 11 monofonctionnel NH₂.

9. Composition selon l'une quelconque des revendications précédentes, **caractérisée en ce que** l'adjuvant fonctionnel consiste en un ou plusieurs plastifiants, promoteurs d'adhésion, stabilisants UV et/ou absorbeurs UV, antioxydants, retardateurs de flamme, colorants/azurants, pigments et charges renforçantes.

10. Structure multicouche, telle que notamment un revêtement de câble ou un tuyau, comportant une pluralité de couches adjacentes, **caractérisée en ce qu'**au moins une de ces couches consiste en la composition telle que définie à l'une quelconque des revendications précédentes.

## Patentansprüche

1. Thermoplastische Zusammensetzung, die aus einer Mischung von Polymeren besteht, welche aus Folgendem besteht:
• einem ersten Polymer, das aus Poly(phenylensulfid) besteht, welches derart vorliegt, dass es 55 % bis 95 % nach Gewicht der Mischung ausmacht,
• einem thermoplastischen Modifizierungsmittel, das derart vorliegt, dass es zwischen 5 % und 45 % nach Gewicht der Mischung ausmacht,
• möglicherweise einen oder mehrere funktionsbezogene Hilfsstoffe, die zu höchstens 10 Gewichts-% der Mischung, vorzugsweise zu höchstens 5 Gewichts-% der Mischung vorliegen,
**dadurch gekennzeichnet, dass** das thermoplastische Modifizierungsmittel ein zweites Polymer umfasst, welches aus einer Polyolefinhauptkette besteht, welche mindestens ein ungesättigtes Monomer (X) und eine Mehrzahl an aufgepfropften Polyamideinheiten enthält, wobei die aufgepfropften Polyamideinheiten über denjenigen Rest des ungesättigten Monomers (X) an die Polyolefinhauptkette gebunden sind, welcher eine funktionelle Gruppe umfasst, die dazu befähigt ist, mittels einer Kondensationsreaktion mit einem Polyamid zu reagieren, welches mindestens ein endständiges Amin und/oder mindestens eine endständige Carbonsäure aufweist, wobei der Rest des ungesättigten Monomers (X) durch Pfropfung oder Copolymerisation an die Hauptkette gebunden ist.

2. Zusammensetzung nach Anspruch 1, **dadurch gekennzeichnet, dass** das thermoplastische Modifizierungsmittel darüber hinaus ein drittes Polymer umfasst, welches aus einem oder mehreren Polyolefinen besteht, wobei vorzugsweise mindestens eines dieser Polyolefine derart funktionalisiert ist, dass es mindestens eine funktionelle Epoxy- und/oder Maleinsäureanhydridgruppe aufweist.

3. Zusammensetzung nach Anspruch 2, **dadurch gekennzeichnet, dass** das zweite und das dritte Polymer in dem thermoplastischen Modifizierungsmittel derart vorliegen, dass sie jeweils 5 % bis 95 %, idealerweise 20 bis 80 %, vorzugsweise 40 % bis 60 % nach Gewicht des thermoplastischen Modifizierungsmittels ausmachen (wobei die Summe dieser beiden Polymere 100 % des thermoplastischen Modifizierungsmittels ausmacht).

4. Zusammensetzung nach Anspruch 2 oder 3, **dadurch gekennzeichnet, dass** das thermoplastische Modifizierungsmittel aus dem zweiten und dem dritten Polymer gemäß den obigen Angaben besteht.

5. Zusammensetzung nach einem beliebigen der vorhergehenden Ansprüche, **dadurch gekennzeichnet, dass** das thermoplastische Modifizierungsmittel 5 % bis 45 %, vorzugsweise 10 % bis 30 % nach Gewicht der oben genannten Mischung ausmacht.

6. Zusammensetzung nach einem beliebigen der vorhergehenden Ansprüche, **dadurch gekennzeichnet, dass** das oben genannte Pfropfpolymer, nämlich das oben genannte zweite Polymer, nanostrukturiert ist.

7. Zusammensetzung nach einem beliebigen der vorhergehenden Ansprüche, **dadurch gekennzeichnet, dass** beim zweiten Polymer das Zahlenmittel des Molekulargewichts der oben genannten aufgepfropften Polyamideinheiten des oben genannten Pfropfpolymers im Bereich von 1.000 bis 10.000 g/mol, vorzugsweise im Bereich von 1.000 bis 5.000 g/mol liegt.

8. Zusammensetzung nach einem beliebigen der vorhergehenden Ansprüche, **dadurch gekennzeichnet, dass** beim zweiten Polymer die aufgepfropften Polyamideinheiten mindestens ein Copolyamid, beispielsweise 6/12 mono NH₂, und/oder ein NH₂-monofunktionelles Polyamid 6 und/oder ein NH₂-monofunktionelles Polyamid 11 umfassen.

9. Zusammensetzung nach einem beliebigen der vorhergehenden Ansprüche, **dadurch gekennzeichnet, dass** der funktionsbezogene Hilfsstoff aus einem oder mehreren Weichmachern, Haftvermittlern, UV-Stabilisatoren und/oder UV-Absorptionsmitteln, Antioxidantien, Flammschutzmitteln, Farbstoffen / optischen Aufhellern, Pigmenten und verstärkenden Füllstoffen besteht.

10. Mehrschichtige Struktur, wie etwa insbesondere eine Kabelbeschichtung oder eine Röhre, die eine Mehrzahl an aneinandergrenzenden Schichten aufweist, **dadurch gekennzeichnet, dass** mindestens eine dieser Schichten aus der Zusammensetzung gemäß der Begriffsbestimmung in einem beliebigen der vorhergehenden Ansprüche besteht.

## Claims

1. Thermoplastic composition consisting of a mixture of polymers, consisting of:
• a first polymer consisting of polyphenylene sulfide, present between 55% and 95% by weight of the mixture,
• a thermoplastic modifier, present between 5% and 45% by weight of the mixture,
• optionally one or more functional adjuvants, present at most at 10% by weight of the mixture, preferably at most at 5% by weight of the mixture,
**characterized in that** the thermoplastic modifier comprises a second polymer consisting of a polyolefin backbone containing at least one unsaturated monomer (X) and a plurality of polyamide grafts, the polyamide grafts are attached to the polyolefin backbone by the residue of the unsaturated monomer (X) comprising a function that can react by a condensation reaction with a polyamide having at least one amine end and/or at least one carboxylic acid end, the residue of the unsaturated monomer (X) is bound to the backbone by grafting or copolymerization.

2. Composition according to Claim 1, **characterized in that** the thermoplastic modifier further comprises a third polymer consisting of one or more polyolefins, preferably including at least one functionalized polyolefin presenting at least one epoxy and/or maleic anhydride function.

3. Composition according to Claim 2, **characterized in that** the second and third polymers are each present in the thermoplastic modifier between 5% and 95%, ideally between 20 and 80%, preferably between 40% and 60% by weight of said thermoplastic modifier (where the sum of these two polymers constitutes 100% of the thermoplastic modifier).

4. Composition according to Claim 2 or 3, **characterized in that** the thermoplastic modifier consists of the second and third abovementioned polymers.

5. Composition according to any one of the preceding claims, **characterized in that** the thermoplastic modifier represents from 5% to 45%, preferably between 10% and 30%, by weight of the abovementioned mixture.

6. Composition according to any one of the preceding claims, **characterized in that** the abovementioned grafted polymer, i.e. the abovementioned second polymer, is nanostructured.

7. Composition according to any one of the preceding claims, **characterized in that**, regarding the second polymer, the number average molar weight of the abovementioned polyamide grafts of the abovementioned grafted polymer is comprised in the range ranging from 1000 to 10,000 g/mol, preferably comprised between 1000 and 5000 g/mol.

8. Composition according to any one of the preceding claims, **characterized in that**, regarding the second polymer, the polyamide grafts comprise at least one copolyamide, for example 6/12 mono NH₂, and/or a monofunctional NH₂ polyamide 6 and/or a monofunctional NH₂ polyamide 11.

9. Composition according to any one of the preceding claims, **characterized in that** the functional adjuvant consists of one or more plasticizers, adhesion promoters, UV stabilizers and/or UV absorbers, antioxidants, flame retardants, colorants/optical brighteners, pigments and strengthening fillers.

10. Multilayer structure, such as in particular a coating for a cable or a tube, including a plurality of adjacent layers, **characterized in that** at least one of these layers consists of the composition as defined in any one of the preceding claims.
